(19) Europäisches Patentamt
European Patent Office
Office européen des brevets

(11) Publication number : **0 484 081 A2**

(12) # EUROPEAN PATENT APPLICATION

(21) Application number : **91309938.8**

(22) Date of filing : **28.10.91**

(51) Int. Cl.$^5$ : **C11D 3/37**, C11D 17/00, B01D 19/04

(30) Priority : **31.10.90 GB 9023674**

(43) Date of publication of application : **06.05.92 Bulletin 92/19**

(84) Designated Contracting States : **CH DE ES FR GB IT LI NL SE**

(71) Applicant : **UNILEVER PLC**
**Unilever House Blackfriars**
**London EC4P 4BQ (GB)**
(84) **GB**

(71) Applicant : **UNILEVER NV**
**Burgemeester s'Jacobplein 1 P.O. Box 760**
**NL-3000 DK Rotterdam (NL)**
(84) **CH DE ES FR IT LI NL SE**

(72) Inventor : **Iley, William John**
**Unilever Res. Port Sunlight Lab., Quarry Road East**
**Bebington, Wirral, Merseyside L63 3JW (GB)**

(74) Representative : **Fransella, Mary Evelyn et al**
**Unilever PLC Patents Division P.O. Box 68**
**Unilever House**
**London EC4P 4BQ (GB)**

(54) **Antifoam ingredient.**

(57) A particulate anti-foam ingredient suitable for use in powdered detergent compositions comprises a silicone oil anti-foam active absorbed by particles of a solid carrier. The particles are coated with from 7 to 15% by weight of the coated anti-foam granules of an organic polymer which is soluble in aqueous alkaline solution.

EP 0 484 081 A2

This invention relates to a particulate anti-foam ingredient which is suitable for incorporation into powdered detergent products.

Detergent products which comprises anionic surfactants or anionic and nonionic surfactant mixtures, and which are particularly suitable for fabric washing, generally have an inherent tendency to produce excessive foam during use. This can be a problem particularly with drum-washing machines. It is accordingly usual to include an anti-foam agent in the detergent formulation to reduce or eliminate this tendency to produce excessive foam. Materials which are effective to control excessive foaming include certain hydrophobic oils such as hydrocarbons and silicone oil.

It is explained in the prior art, for example in EP-A-266863 (Unilever), that oily anti-foam active materials can migrate out of the carrier substance into the surrounding powder during storage and if this happens they are liable to become deactivated. Consequently, the prior art describes various expedients to diminish this migration of anti-foam active out of the particles which initially contain it. For instance, EP-A-266863 (Unilever) discloses the superior retention of anti-foam active on an inorganic carrier which is a porous absorbent material comprising sodium carbonate.

We have found that there is a further problem related to migration of silicone oil anti-foam active out of anti-foam particles. This problem is that escaping silicone oil can cause incomplete dispensing when granular detergent compositions are used in automatic front-loading washing machines. A proportion of the powder which has been dosed into the dispenser of the machine is left behind in the dispenser at the point in the machine's operating cycle when the powder should be washed from the dispenser into the main drum of the machine.

However, we have observed that unsatisfactory dispensing behaviour tends to arise when a silicone oil anti-foam is incorporated into a detergent powder which, without the antifoam, disperses satisfactorily. This is so even when this silicone oil anti-foam is incorporated into a particulate ingredient. We believe that the difficulty arises from very tiny traces of silicone anti-foam which escape from the anti-foam particles and get to the surface of the particles of the detergent composition. We have found that this difficulty can arise when the amount of silicone oil escaping from the anti-foam particles is as little as 0.002% by weight based on the detergent composition as a whole. This will likely be only a fraction of one per cent of the quantity of anti-foam active which is present in the composition.

This is therefore a different problem from that addressed by the prior documents. In the prior documents the objective was to retain anti-foam active within the particles of an anti-foam ingredient so as to avoid deactivation of the anti-foam. From such a view point of seeking substantially to preserve anti-foam activity, the loss of only a fraction of a per cent of the anti-foam would be of no significance. However, so far as concerns achieving good dispensing, we have found that such tiny quantities have very considerable significance.

We have now found that dispensing can be improved by appropriate choice of coating on anti-foam particles.

Whether a coating is used to retain anti-foam active against deactivation, or is used for the more stringent requirement of preventing leakage of traces, there is an inherent problem. Any kind of coating on anti-foam active particles is called upon to perform two somewhat contradictory functions. Until the detergent composition containing the anti-foam ingredient comes into contact with wash water, the coating is required to retain anti-foam active within the particles of the anti-foam ingredient. However, when the particles come into contact with wash water, they are required to release the anti-foam active promptly. If the release is delayed the detergent composition could well foam excessively before release of the anti-foam.

The prior art has disclosed the use of wax as a coating material for anti-foam particles, for example EP-A-71481 (Unilever) discloses anti-foam particles having a core of gelatinised starch with silicone anti-foam absorbed thereon and a coating of paraffin wax at the exterior of the particles. EP-A-206522 (Unilever) is a further example of anti-foam particles with an outer, wax coating. However, wax coatings do not dissolve particularly well in normal wash conditions and therefore do not release sufficient anti-foam.

EP 301 412 (Henkel) discloses pourable, free-flowing anti-foam additive granules containing silicone anti-foam and a high foaming anionic surfactant on a cellulose-based substrate. The granules may be treated with preferably below 10 wt % (more preferably below 7 wt %) alkali-soluble or dispersible polymer.

## Summary of the Invention

Accordingly, the present invention provides a particulate anti-foam ingredient comprising a silicone oil anti-foam active absorbed by particles of solid carrier, characterised in that the particles are coated with from 7 to 15% by weight of the coated anti-foam granules of an organic polymer which is soluble in aqueous alkaline solution.

The various constituents of an ingredient as defined above will now be discussed by turn.

## The solid carrier

A variety of materials can be used as a solid carrier for an anti-foam active. Materials disclosed by prior documents as being suitable carriers include gelatinised starch, zeolite, hydrophobic silica, sodium perborate tetrahydrate or monohydrate and other water-soluble salts such as sodium tripolyphosphate and sodium sulphate. A number of such materials are referred to in EP-A-206522 (Unilever).

It may be preferred that the carrier material is inorganic, since inorganic carrier materials tend to have superior mechanical strength. An inorganic carrier material may be crystalline or amorphous (e.g. crystalline sodium carbonate, crystalline zeolite, amorphous zeolite).

Especially, it is preferred that the carrier particles are a water-soluble inorganic carrier of the type referred to in EP-A-266863 (Unilever). The carriers of that application are especially effective for absorbing and retaining oily anti-foam active substances. They are defined as being porous absorbent materials comprising sodium carbonate and having a mean particle diameter not exceeding 2,000 μm, preferably 250-1500 μm, even more preferably 700 μm; a pore volume of from 0.2 to 1.0 $cm^3/g$ and a median pore diameter not greater than 20 μm. One example of such a material is light soda ash. Further example are crystal-growth-modified sodium carbonate monohydrate, crystal-growth-modified Burkite (double salt of sodium carbonate and sodium sulphate) and crystal-growth-modified sodium sesquicarbonate. These materials are described in more detail in EP-A-266863 (Unilever) and the crystal-growth-modified carbonate salts are described and claimed in EP-A-221776 (Unilever).

## Anti-foam active

The anti-foam active to which this invention relates must comprise a silicone oil, either alone or jointly with another antifoam active such as a hydrocarbon oil or a wax (e.g. petroleum jelly).

Silicone oils are polysiloxanes. Those which can be employed as anti-foam actives have the structure:

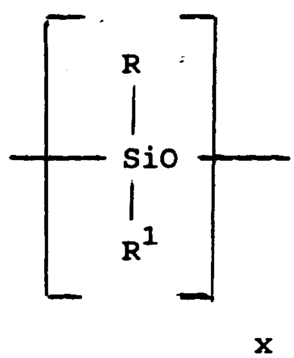

where R and $R^1$ are the same or different alkyl or aryl groups having from 1 to 6 carbon atoms and x is an integer of at least 20.

The preferred polysiloxanes are polydimethylsiloxanes, where both R and $R^1$ are methyl groups.

The polysiloxanes usually have a molecular weight of from 500 to 200,000 and are generally non-volatile, in that they have a kinematic viscosity of from $50mm^2s$ to $2 \times 10^6 mm^2s$. Preferably, the polysiloxanes have kinematic viscosity of from $5 \times 10^2$ to $5 \times 10^4 mm^2s$, most preferably from $3 \times 10^3$ to $3 \times 10^4 mm^2s$ at 25°C. The polysiloxane is generally end blocked with trimethylsilyl groups, but other end-blocking groups are also suitable.

Examples of suitable commercially available polysiloxanes are the polydimethyl siloxanes, "Silicone 200 Fluids" available from Dow Corning, having viscosities of from 50 to $5 \times 10^4 mm^2s$.

For convenience the term "silicone oil" is used herein to denote liquid polysiloxane.

Other anti-foam active materials may be included in the particulate ingredient of the present invention. Such materials may be anti-foam actives in their own right or may be anti-foam promoters which serve to enhance the activity of another anti-foam active. Further anti-foam materials include fatty esters of natural or synthetic origin, for instance beeswax, carnauba wax, spermaceti, and synthetic fatty esters of $C_{16}$-$C_{22}$ fatty acids.

Examples of anti-foam promoters include hydrophobic silica and the alkali phosphates and alkali nitrogen compounds which are discussed in EP-A-266863 (Unilever). Silicone oil is virtually invariably used in conjunction with hydrophobic silica particles.

Polymer coating

The polymer which is used as a coating material in this invention needs to be soluble in aqueous alkaline solution so that it will dissolve when it comes into contact with the alkaline wash liquor formed by dissolution of the other constituents of a granular detergent composition. Thus it should be soluble in aqueous solution of pH 10 or greater. Preferably it is soluble in aqueous solution of pH 8.5 or greater.

Solubility in neutral or even acidic aqueous solution is possible within the scope of this invention provided that solubility is also apparent under alkaline conditions.

The solubility at pH 8.5 may be greater than the solubility at pH 7. This may be beneficial because it can be expected that, in use, the water entering the dispenser of a washing machine will be neutral or even slightly acidic, and will become alkaline as the detergent composition dissolves. If the solubility of the polymer coating is greater at alkaline pH than at neutral pH, then the coating of the anti-foam particles can be expected to dissolve slightly after the remainder of the composition.

The polymer is preferably a polymer of one or more olefinically unsaturated monomers. More preferably one or more monomers contain acidic groups, which are most likely to be carboxylic acid groups. The presence of such groups confers solubility under alkaline conditions. Thus more particularly, the polymer may be a homopolymer or copolymer of acrylic, methacrylic or ethacrylic acid. Such monomers may be copolymerised with other monomers in which ionisable acid groups are not present. Examples of such other monomers include acrylate and methacrylic esters such as N-butyl acrylate. Further examples are styrene and vinylacetate.

One example of a suitable coating polymer is an alkali soluble latex whose constituent monomers, as percentages by weight are:
styrene 10%
N-butyl acrylate 60%
methacrylic acid 30%

Such a latex is available from National Starch under their designation P.P.E. 1061.

Further examples of alkali soluble latices are the "Eudragit" (trade mark) range available from Rohm and Haas, for example Eudragit S12.5 (trade mark) and Eudragit S100 (trade mark) which are copolymers of methacrylic acid and methyl methacrylate.

The polymer coating is from 7 to 15% by weight of the coated anti-foam particles (corresponding to a coating thickness of 15 to 55 μm) and the amount of polymer used to form a coating layer on the anti-foam ingredient particles is chosen so as to provide adequate encapsulation of the oily anti-foam within the particles and yet not delay release of the anti-foam unduly. An optimum amount of the polymer coating will depend to some extent on the constituent of the polymer used to provide the coating. The optimum amount can be determined by experiment, making and testing trial quantities of anti-foam ingredient in the manner described in the examples which follow.

Application of the polymer coating is preferably carried out in a fluidised bed, as described in EP-A-54174 (Unilever) the disclosure of which is incorporated herein by reference. For this procedure a polymer latex is introduced into a fluidised bed of the particles to be coated, while the bed is maintained at a temperature which is at least as great as a value 10°C less than the glass transition temperature of the polymer. The bed temperature may be higher than the glass transition temperature, but preferably is not more than 20°C above it.

For such a coating process it is preferred that the polymer has a glass transition temperature in a range from 30°C to 80°C.

Other coating techniques may be employed. One possibility is to use the Accela Cota which is a side vented drum machine made by Manesty Machines Ltd and usually used for coating tablets in the pharmaceutical industry.

Additional coating

The effectiveness of an alkali-soluble polymer coating may be further enhanced by providing an additional coating either beneath or on top of the polymer coating. Thus for example a silicate film coating could possibly be applied to the particles before coating with the synthetic polymer required for the present invention. Another expedient would be to coat the particles with the alkali-soluble polymer in accordance with the present invention and subsequently apply an exterior coating of water soluble material such as polyethylene glycol.

Any additional coating may constitute 0 to 15% of the particles.

Preferred proportions of components

The total amount of anti-foam active material (active substance plus optional promoter) which is carried

by the porous inorganic carrier is preferably from 4 to 50%, more preferably from 10 to 40% and most preferably from 12 to 35% by weight of the total anti-foam ingredient. The carrier preferably forms from 35 to 91%, more preferably from 45 to 90% and most preferably from 50 to 85% by weight of the total anti-foam ingredient.

If both anti-foam active substance(s) and promoter are present the anti-foam active substance(s) can form from 1 to 99% by weight and the anti-foam promoter(s) can form from 99 to 1% by weight of the total anti-foam substance carried by the porous carrier. Preferably the anti-foam active substance constitutes from 75 to 90% of the total anti-foam material present, the balance being promoter.

It is preferred that polysiloxane constitutes 35 to 100% of the anti-foam active(s) present and 30 to 90% of total anti-foam material including promoter. Thus the amount of polysiloxane is preferably 1.5 to 50% by weight, more preferably 3 to 40% of the anti-foam ingredient.

## Process of preparation

The production of carrier particles with absorbed anti-foam actives can be carried out in accordance with the techniques described in the prior art, for instance as detailed in the examples of EP-A-266863 (Unilever), EP-A-206522 (Unilever) and EP-A-71481 (Unilever) already referred to.

To obtain a good coating film on such particles, it is preferred that the particles are spherical and non-porous. Particles may be rendered spherical and their porosity reduced or eliminated by procedures for the purpose such as described by Rowe in Pharmacy International, May 1985, pages 119-123.

## Detergent composition

It is envisaged that the coated particles constituting the particulate anti-foam ingredient according to this invention will be incorporated in a granular detergent composition. Such a composition can comprise from 0.1 to 5%, preferably from 0.2 to 3% and most preferably from 0.5 to 2% by weight of the anti-foam ingredient. Detergent compositions as envisaged will generally contain one or more detergent-active compounds and one or more detergency builders. They will generally also contain one or more other conventional detergent ingredients, for example bleaching materials, enzymes, anti-redeposition agents and fluorescers.

Suitable detergent active compounds are well known in the art and can be chosen from soap and non-soap anionic, cationic, nonionic, amphoteric or zwitterionic detergent active compounds and mixtures thereof. Many suitable detergent-active compounds are commercially available and are fully described in the literature, for example in "Surface Active Agents and Detergents" Volumes I and II by Schwartz, Perry and Berch.

The detergent-active compounds which can be used are soaps and synthetic non-soap anionic and nonionic compounds. Mixtures of detergent-active compounds, for example mixed anionic or mixed anionic and nonionic compounds are preferably used in the detergent compositions.

The detergent active component of the detergent powder composition will generally comprise from 5 to 40%, preferably from 8 to 30% by weight of the composition.

Detergency builders are materials which function to soften hard water by solubilisation or other removal of calcium and to a lesser extent magnesium salts responsible for water hardness. Detergency builders can be soluble inorganic compounds, especially exemplified by sodium tripolyphosphate. A further water soluble inorganic builder compound is sodium carbonate which is generally used in conjunction with a seed crystal to accelerate the precipitation of calcium carbonate. Common insoluble inorganic detergency builders are ion exchange compounds notably aluminos silicates. Organic detergency builders such as sodium citrate and polyacrylate can also be used. The detergency builder component of a detergent composition will generally comprise from 1 to 90%, preferably from 5 to 75% by weight of the detergent composition.

Bleaching materials include peroxy bleach compounds such as inorganic persalts and organic peracids. Sodium perborate is preferred as organic persalt. Persalts, especially perborates may be used in conjunction with a bleach activator. Bleaching material, if present, will generally comprise from 1 to 30% preferably from 5 to 20% by weight of a detergent composition.

Other ingredients which are customary included in a detergent composition, although not necessarily all together, include alkaline silicate, soil release agents, anti-redeposition agents such as sodium carboxymethyl cellulose, enzymes, fabric softening agents, fluorescent brightners and filler such as sodium sulphate.

A detergent composition to be used with the anti-foam ingredients for the present invention should form an alkaline wash liquor when it dissolves. The level of alkalinity can be in accordance with conventional practice, in accordance with which a detergent composition is required to be alkaline, but not too strongly alkaline as this could result in fabric damage and also be hazardous for domestic use. In practice the compositions should preferably provide a pH of from 8.5 to 11 in use in the aqueous wash liquor. It is preferred in particular for domestic products to yield a pH of from 9.0 to 10.5, as lower pH values tend to be less effective for optimum detergency

and more highly alkaline products can be hazardous if misused. The pH is measured at the lowest normal usage concentration of 0.1% w/v of the product in water of 12°H (Ca) (French permanent hardness, calcium only) at 50°C so that a satisfactory degree of alkalinity can be assured in use at all normal product concentrations.

## EXAMPLES

### Example 1

Anti-foam particles were prepared in accordance with EP-A-266863 (Unilever). The composition of these anti-foam particles was:

| | weight % |
|---|---|
| Light soda ash | 76.0 |
| Silicone oil | 13.5 |
| Alkyl phosphate | 1.5 |
| Petroleum jelly | 7.2 |

The particles were of 0.7mm average diameter and were passed through a sieve to exclude any oversized particles.

These particles were spheronized using a rotating plate in a vertical cylinder as described in Pharmacy International, May 1985, pages 119-123. The resulting spherical particles were then film coated with an alkali soluble latex having the composition referred to above that is to say:

| | |
|---|---|
| Styrene | 10 weight % |
| N-butyl acrylate | 60 weight % |
| Methacrylic acid | 30 weight% |

This polymer had a glass transition temperature of 40°C and dissolves in aqueous solutions having pH 8.2 or above. The amount of polymer coating was arranged to be 8% by weight based on the uncoated particles (approx. 7.5% by weight of the coated particles).

The polymer coating was applied by the technique described in EP-A-292314 (Unilever) using a Glatt fluidised bed coating apparatus (Glatt Equipment Corporation). The polymer latex was sprayed in by the Wurster spray method, described in US 3253944 (D E Wurster; Wisconsin Alumni Research Foundation), and referred to in EP-A-292314 (Unilever). The bed temperature was maintained at 42°C which was close to the glass transition temperature of the polymer.

A detergent base powder prepared by spray drying followed by adding certain ingredients had the following composition:

| Spray-dried | % by weight |
|---|---|
| Sodium alkyl benzene sulphonate | 8.3 |
| Ethoxylated fatty alcohol (average 7EO) | 2.5 |
| Zeolite | 23.3 |
| Maleic/acrylic copolymer | 4.5 |
| Sodium carboxymethylcellulose | 0.5 |
| Sodium carbonate | 5.5 |
| Minor ingredients | 0.9 |
| Water | 10.00 |
| **Added subsequently** | |
| Sodium carbonate | 3.00 |
| Ethoxylated fatty alcohol (average 3EO) | 4.21 |
| Zeolite | 4.5 |
| Sodium perborate monohydrate | 16.3 |
| Tetraacetylethylene diamine | 4.5 |
| Water and minor ingredients | balance to 100% |

The coated particles were added to the samples of the base powder in a weight ratio of coated particles : base powder = 1 : 10. The resulting mixtures were placed in polyethylene bags and shaken intensively for one minute.

As a comparison anti-foam particles which had not been coated with the polymer were also mixed into samples of the detergent powder in a quantity calculated to give the same amount of anti-foam active in the final mixture.

The dispensing of these samples from a washing machine was tested using a dispenser drawer as fitted to a Phillips (trade mark) AWB126 washing machine. A 200g dose of powder is placed in the main compartment of the drawer and tap water at 10°C and 12° French Hardness is allowed to flow through at a rate of 5 litre/min for two minutes. At the end of this period the flow is stopped, excess water is poured off, the residual mass of wet powder is weighed and the weight is expressed as a percentage of the dry powder initially placed in the dispenser drawer. The test was carried out twice and the results are as follows:

Per cent wet residues

| Base Powder | Base Powder Plus coated particles | Base Powder plus uncoated particles |
|---|---|---|
| 9.0 | 29.7 | 102 |
| 11.2 | 39.3 | 102 |

It can readily be seen that coating of the anti-foam particles has greatly improved dispensing as compared with uncoated particles.

Example 2

Anti-foam particles were prepared as in example 1, then coated with the same polymer latex in an amount which was 10% by weight of the uncoated particles.

The coated particles were added to samples of the same base powder as used in example 1. The amounts added were 4.9% based on the detergent composition so that the composition eventually contained 0.6% silicone oil. The compositions were mixed for 15 minutes in a mechanical mixer both to give thorough mixing and to simulate the mechanical damage to particles when could be expected during machine processing, transport and storage.

Samples of the resulting mixtures were subjected to a dispensing test generally as described in example 1. However, the wet residues left in the dispenser drawer were dried in an over to constant weight. This dry weight is then expressed as a percentage of the dry powder initially placed in the dispenser drawer. The results of three tests were:

Percent dry residues

| Base powder | Base powder plus coated particles | Base powder plus uncoated particles |
|---|---|---|
| <10 | 10.7 | 70-100 |
| <10 | 31.5 | 70-100 |
| <10 | 14.4 | 70-100 |

Anti-foam properties were checked by measuring foam heights developed in the wash. For these tests a Miele 756 washing machine was used to wash 2.5kg clean cotton load, using the main 40°C wash cycle only. The test was also carried out as particles with a thicker (16%) coating. 200g of powder was used for each wash and the water inlet temperature was 10°C. Again the hardness was 12°FH. The results were as follows:

Foam Heights (cm)

| Time in the wash (mins) | Uncoated particles | 10% polymer coating | 16% polymer coating |
|---|---|---|---|
| 0 | 0 | 0 | 0 |
| 5 | 0 | 5 | 35 |
| 10 | 0 | 0 | 68 |
| 15 | 0 | 0 | 0 |
| 30 | 8 | 18 | 17 |
| 45 | 40 | 40 | 60 |
| 60 | 95 | 100 | 100 |

As can be seen from the table, the particles with a 10% polymer coating gave similar anti-foam performance to uncoated particles. Particles with a 16% polymer coating gave an undesirable quantity of foaming early in the wash, presumably because the time taken for the thicker polymer coating to dissolve was delaying the release of anti-foam active.

Example 3

Antifoam particles were prepared as described in Example 1. The resulting spherical particles were then film coated with an inner coating of 10.5 wt% of the coated particle neutral silicate using a Glatt fluidised bed as described in Example 1.

The particle was then provided with an outer coating of 30% hydrocarbon wax (melting point 50°C) via first heating the wax to 65°C before coating the particles using a Toroidal bed (Model 300, Oaktree Services Limited, Faringdon, Oxfordshire).

These antifoam particles had excellent dispensing properties but poor foam control. This result is attributed to the paraffin wax having a higher melting point than the temperature of the early part of the wash cycle causing inefficient mass transfer of the antifoam.

## Claims

1. A particulate anti-foam ingredient comprising a silicone oil anti-foam active absorbed by particles of a solid carrier, characterised in that the particles are coated with from 7 to 15% by weight of the coated anti-foam granules of an organic polymer which is soluble in aqueous alkaline solution.

2. An ingredient according to claim 1 characterised in that the organic polymer is a polymer of one or more olefinically unsaturated monomers, including an olefinically unsaturated carboxylic acid.

3. An ingredient according to claim 2 characterised in that the organic polymer is a copolymer of an unsaturated carboxylic acid and one or more other olefinically unsaturated monomers.

4. An ingredient according to claims 1 to 3, characterised in that the polymer has a glass transition temperature in a range from 30°C to 80°C.

5. An ingredient according to any one of the preceding claims characterised in that the amount of silicone oil is from 1.5 to 50% weight of the ingredient.

6. A particulate detergent composition containing 0.1 to 5% by weight of an ingredient according to any one of the preceding claims.